# EUROPÄISCHE PATENTSCHRIFT

(11) **EP 2 602 449 B1**
(45) Veröffentlichungstag und Bekanntmachung des Hinweises auf die Patenterteilung: **16.03.2016**
(21) Anmeldenummer: 12195641.1
(22) Anmeldetag: 05.12.2012
(51) Int. Cl.: F02B 37/02, F01N 3/02, F01N 5/02

(54) **Verbrennungskraftmaschine mit Abgasturbolader und Abgaskühler sowie Verfahren zur Steuerung/Regelung der Betriebstemperatur des Abgasturboladers**
Combustion engine with exhaust gas turbocharger and exhaust gas cooler and method for controlling/regulating the working temperature of the exhaust gas turbocharger
Moteur à combustion interne avec turbosoufflante de gaz d'échappement et refroidisseur de gaz d'échappement ainsi que procédé de commande/réglage de la température de fonctionnement de la turbosoufflante de gaz d'échappement

(30) Priorität: 08.12.2011 DE 102011088019
(43) Veröffentlichungstag der Anmeldung: 12.06.2013
(73) Patentinhaber: Continental Automotive GmbH, 30165 Hannover (DE)
(72) Erfinder: Hiller, Marc, 67294 Morschheim (DE); Böning, Ralf, 67829 Reiffelbach (DE); Herfurth, Roland, 93051 Regensburg (DE); Sparrer, Christoph, 93053 Regensburg (DE)

(56) Entgegenhaltungen:
- CA-A1- 2 273 698
- DE-A1-102009 049 993
- DE-A1-102010 014 250
- GB-A- 2 414 690
- JP-A- 2009 138 719

## Beschreibung

Die Erfindung betrifft eine mittels eines Abgasturboladers aufgeladene Verbrennungskraftmaschine, bei der zur Kühlung des Abgasstromes ein Abgaskühler an der Abgasleitung zwischen Verbrennungskraftmaschine und Abgasturbolader angeordnet ist. Desweiteren betrifft die Erfindung ein Verfahren zur Steuerung und ein Verfahren zur Regelung der Betriebstemperatur des Abgasturboladers

Abgasturbolader werden vermehrt zur Leistungssteigerung bei Kraftfahrzeug-Verbrennungsmotoren (Verbrennungskraftmaschinen) eingesetzt. Dies geschieht immer häufiger mit dem Ziel den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen um den Druck im Ansaugtrakt des Verbrennungsmotors zu erhöhen und so eine bessere Befüllung des Brennraumes mit Luft-Sauerstoff zu bewirken und somit mehr Treibstoff, Benzin oder Diesel, pro Verbrennungsvorgang umsetzen zu können, also die Leistung des Verbrennungsmotors zu erhöhen.

Ein Abgasturbolader weist dazu eine im Abgasstrang des Verbrennungsmotors angeordnete Turbine mit einem durch den Abgasstrom angetriebenen Turbinenlaufrad und einen im Ansaugtrakt angeordneten Verdichter mit einem den Druck aufbauenden Verdichterlaufrad auf. Turbinenlaufrad und Verdichterlaufrad sind drehfest an den gegenüberliegenden Enden einer Rotorwelle befestigt, die in einer zwischen Turbine und Verdichter angeordneten Lagereinheit drehgelagert ist. Somit wird mit Hilfe des Abgasmassenstroms das Turbinenrad und über die Rotorwelle wiederum das Verdichterrad angetrieben und die Abgasenergie so zum Druckaufbau im Ansaugtrakt genutzt.

Turbinen und Verdichter sind Strömungsmaschinen und haben aufgrund der physikalischen Gesetzmäßigkeiten einen jeweils von Baugröße und Bauart abhängigen optimalen Betriebsbereich der durch den Massedurchsatz, das Druckverhältnis und die Drehzahl des jeweiligen Laufrades sowie eine bestimmte Betriebstemperatur oder einen Betriebstemperaturbereich gekennzeichnet ist.
Im Gegensatz dazu ist der Betrieb eines Verbrennungsmotors in einem Kraftfahrzeug von dynamischen Änderungen der Last und des Betriebsbereiches gekennzeichnet. Dadurch sind der Abgasmassenstrom sowie die Abgastemperatur beträchtlichen Schwankungen unterworfen, die sich auf den Betriebspunkt des Abgasturboladers so auswirken können, dass dieser zeitweise weit außerhalb seines optimalen Betriebsbereiches betrieben wird, was zu entsprechenden Leistungsverlusten führt.

Darüber hinaus führt die thermische Belastung durch die teilweise sehr hohen Abgastemperaturen zu Aufheizung insbesondere der Turbinenbauteile des Abgasturboladers bis auf über 1050°Celsius. Die gleichzeitig sehr hohen mechanischen Belastungen der Turbinenbauteile bei Umdrehungszahlen des Turbinenläufers bis über 200.000 Umdrehungen/Minute stellen an die verwendeten Werkstoffe entsprechend hohe Anforderungen, so dass in diesen Fällen nur sehr hochwertige Werkstoffe Verwendung finden können, was in der Regel erhöhte Systemkosten zur Folge hat. Auch der Einsatz neuer Technologien im Abgasturbolader, wie zum Beispiel Turbinenräder aus Titan-Aluminium-Legierungen, variabel verstellbare Turbinengeometrien oder Magnetlagerungen des Laufzeugs, kann durch zu hohe Temperaturen eingeschränkt werden.

Eine Möglichkeit zur Senkung dieser hohen Temperaturen besteht in der Absenkung der Abgastemperatur durch die Einspritzung erhöhter Kraftstoffmengen, was unter dem Begriff "Anfetten" bekannt ist. Dies führt neben einer geringen zusätzlichen Leistungssteigerung und einer verminderten Klopfneigung des Motors zu einer Absenkung der Abgastemperaturen, da der zusätzlich eingebrachte Kraftstoff den Brennraum kühlt. Diese Maßnahme hat jedoch die beträchtlichen Nachteile eines erhöhten Kraftstoffverbrauchs und darüber hinaus einen erhöhten Schadstoffausstoß aufgrund der unvollständigen Verbrennung, ausgelöst durch den Sauerstoffmangel. Dies ist jedoch vor dem Hintergrund ständig steigender Anforderungen, im Hinblick auf Ver brauchs- und Schadstoffreduzierung, heute nicht mehr akzeptabel

Um zu hohe Abgastemperaturen und zu hohe Temperaturen der Abgasturbine zu vermeiden wird deshalb in den Dokumenten DE1940909 und DE19714341C2 eine Kühlung für den Abgasturbolader sowie die Anordnung eines Abgaskühlers an der Abgasleitung zwischen Verbrennungsmotor und Abgasturbolader vorgeschlagen. Der gesamte Abgas-Massestrom durchfließt den kontinuierlich betriebenen Abgaskühler und wird somit unabhängig von den jeweiligen, sich gegebenenfalls dynamisch ändernden Betriebsbedingungen ständig gekühlt. Dadurch wird ein insgesamt niedrigeres Temperaturniveau, möglicherweise sogar teilweise zu niedrig, erreicht. Die sich bei dynamischem Betrieb des Verbrennungsmotors ergebenden Temperaturschwankungen werden dadurch jedoch nicht berücksichtigt. Somit besteht auch hier die Gefahr, dass der Abgasturbolader in bestimmten Fällen außerhalb des an sich optimalen Betriebstemperaturbereiches betrieben wird und somit Leistungsverluste und eine erhöhte Gefahr der thermischen Schädigung bestimmter Bauteile des Abgasturboladers in Kauf genommen werden müssen.

Aus der DE 10 2010 014 250 A1 sind eine Vorrichtung und ein Verfahren zur Steuerung des Abgasstroms einer Verbrennungskraftmaschine bekannt. Die bekannte Vorrichtung weist einen ersten Abgaskanal und einen mit einem Wärmetauscher versehenen zweiten Abgaskanal auf, denen jeweils regelbar ein Teilabgasstrom zugeführt wird. Der erste Abgasstrom ist mit einem ersten Auslassventil und der zweite Abgaskanal mit einem zweiten Auslassventil eines Zylinders der Verbrennungskraftmaschine verbunden. Das erste Auslassventil und das zweite Auslassventil sind zur Mengeneinstellung der den Abgaskanälen zugeführten Abgasströme jeweils mit einem getrennt regelbaren Ventiltrieb verbunden. Ausgangsseitig werden die beiden Abgaskanäle vor einem Turbolader als eine Leitung zusammengeführt, die mit einer Turbine des Abgasturboladers verbunden ist.

Der vorliegenden Erfindung liegt die Aufgabe zugrunde, eine Verbrennungskraftmaschine mit Abgasturbolader sowie ein zugehöriges Verfahren zur Steuerung oder Regelung anzugeben, durch die die Betriebstemperatur des Turboladers insgesamt gesenkt und Leistungsverluste des Abgasturboladers aufgrund schwankender, zu hoher oder zu niedriger Betriebstemperaturen des Abgasturboladers weiter reduziert sind.

Diese Aufgabe wird durch eine Verbrennungskraftmaschine mit Abgasturbolader und Abgaskühler gemäß Anspruch 1 sowie durch die zugeordneten Verfahren zur Steuerung/Regelung der Betriebstemperatur gemäß der Ansprüche 8 und 9 gelöst.

Die erfindungsgemäße Verbrennungskraftmaschine weist zumindest eine Abgasleitung und einen an zumindest die eine Abgasleitung angeschlossenen Abgasturbolader auf, wobei die zumindest eine Abgasleitung zwischen Verbrennungskraftmaschine und Abgasturbolader einen an einen Abführanschluss und einen in Strömungsrichtung nach dem Abführanschluss angeordnete Rückführanschluss der zumindest einen Abgasleitung angeschlossenen Parallel-Abgaszweig mit einem darin angeordneten Abgaskühler aufweist. Dabei sind in der Abgasleitung und/oder dem Parallel-Abgaszweig mehrere Ventileinrichtungen so angeordnet, dass bei deren Betätigung ein Anteil des die Abgasleitung durchströmenden Abgases der Verbrennungskraftmaschine zur Kühlung durch den Abgaskühler geleitet werden kann, bevor es den Abgasturbolader durchströmt und wobei weiterhin
- im Bereich des Abführanschlusses der jeweiligen Abgasleitung eine erste, als Ventilklappe ausgebildete Ventileinrichtung so angeordnet ist, dass diese im Maß einer Betätigung die Abgasleitung in Strömungsrichtung hinter dem Abführanschluss kontinuierlich schließt, im Bereich des Rückführanschlusses der jeweiligen Abgasleitung eine zweite, als Ventilklappe ausgebildete Ventileinrichtung so angeordnet ist, dass diese im Maß einer Betätigung den Rückführanschluss kontinuierlich öffnet und dass der durch den Abgaskühler geleitete Anteil des die Abgasleitung durchströmenden Abgases zwischen 0% und 100% liegt
   oder
- der Abführanschluss und der Rückführanschluss an der jeweiligen Abgasleitung sich gegenüberliegend versetzt angeordnet sind, wobei in der Abgasleitung zwischen Abführanschluss und Rückführanschluss eine Ventileinrichtung angeordnet ist, die derart als Drehschieberventil ausgebildet ist, dass diese im Maß ihrer Betätigung den Abführanschluss und gleichzeitig den Rückführanschluss kontinuierlich öffnet und dabei im gleichen Maß der Betätigung die Abgasleitung zwischen Abführanschluss und Rückführanschluss schließt.

Je nach Anzahl und Anordnung der Brennräume oder Zylinder der Verbrennungskraftmaschine sind gegebenenfalls mehrere separate Abgasleitungen und auch mehrere Abgasturbolader vorhanden. Ebenfalls kann sowohl eine einzelne Abgasleitung zu einem Abgasturbolader führen oder es können mehrere einzelne Abgasleitungen zu einer gemeinsamen Sammel-Abgasleitung zusammengefasst zu einem Abgasturbolader führen. Ebenso kann der erfindungsgemäße Parallel-Abgaszweig an einer einzelnen oder auch an einer Sammel-Abgasleitung angeordnet sein. Je nach Anordnung kann dann entsprechend nur der Abgasanteil der durch die entsprechende Einzel-Abgasleitung oder Sammel-Abgasleitung strömt in den Parallel-Abgaszweig umgeleitet und dem Abgaskühler zugeführt werden.

Die erfindungsgemäße Verbrennungskraftmaschine ermöglicht es das Abgas nicht permanent sondern nur bei Bedarf und in dem erforderlichen Umfang zu kühlen. Daraus ergibt sich eine bessere Einhaltung des gewünschten Betriebstemperaturbereichs des Abgasturboladers und dadurch eine verbesserte Leistungsausbeute der Verbrennungskraftmaschine. Darüberhinaus wird die thermische Wechselbelastung des Turboladers bei dynamischer Änderung des Betriebspunktes der Verbrennungskraftmaschine reduziert und so die Lebensdauer des Abgasturboladers erhöht. Liegen die Abgastemperaturen beispielsweise unterhalb der maximal zulässigen Betriebstemperatur, so kann das Abgas ungekühlt durch den Abgasturbolader strömen, um gleichzeitig zu gewährleisten, dass der Katalysator auf Betriebstemperatur bleibt. Erst wenn die Betriebstemperatur des Abgasturboladers einen festgelegten kritischen Wert zu überschreiten droht, wird ein Teil des Abgas-Massenstroms in den Parallel-Abgaszweig und somit durch den Abgaskühler geleitet. So können temperaturempfindliche Bauteile des Abgasturboladers geschützt werden und bei gleichzeitig niedrigen Kraftstoffverbrauch und reduziertem Schadstoffausstoß die Leistungsausbeute der Verbrennungskraftmaschine erhöht werden.

Das erfindungsgemäße Verfahren zur Steuerung der Betriebstemperatur des Abgasturboladers einer Verbrennungskraftmaschine mit einer Anordnung eines Parallel-Abgaszweiges in der Abgasleitung wie zuvor beschrieben ist dadurch gekennzeichnet, dass eine Abgastemperatur in der Abgasleitung in Strömungsrichtung vor dem Abführanschluss mittels eines Temperatursensors gemessen wird und der Anteil des die Abgasleitung durchströmenden Abgases der Verbrennungskraftmaschine, der zur Kühlung durch den Abgaskühler geleitet wird, mittels der Ventileinrichtungen, in Abhängigkeit von der gemessenen Abgastemperatur, so eingestellt wird, dass eine Betriebstemperatur des Abgasturboladers innerhalb eines zulässigen Bereiches zu erwarten ist. Voraussetzung dafür ist das Vorhandensein entsprechender Erfahrungswerte, die zum Beispiel in einem Proportionalitätsdiagramm in einer zugehörigen elektronischen Steuereinheit abgelegt sind. Dabei wird von der Ausgangstemperatur des Abgases vor der Kühlung ausgegangen und zum Beispiel mittels des Proportionalitätsdiagramms ein Maß für die Betätigung der Ventileinrichtungen ermittelt, das bei vorausgesetzter Kühlwirkung des Abgaskühlers sicherstellt, dass das Abgas auf einen gewünschten Wert gekühlt wird, der wiederum eine gewünschte Betriebstemperatur des Abgasturboladers zur Folge hat.

Ergänzend kann bei der Steuerung auch eine Kühlmitteltemperatur zum Bespiel am Kühlmitteleinlass des Abgaskühlers gemessen werden und bei der Bestimmung des Maßes für die Betätigung der Ventileinrichtung mit berücksichtigt werden. Auch die Einbeziehung der Kühlmitteltemperatur kann mit Hilfe eines entsprechenden Proportionalitätsdiagrammes erfolgen. Damit kann der Einfluss einer Änderung der Kühlwirkung im Abgaskühler auf die Betriebstemperatur des Abgasturboladers neutralisiert werden. Neben den vorgenannten Vorteilen der Gesamtanordnung der erfindungsgemäßen Verbrennungskraftmaschine ermöglicht dieses Verfahren eine schnelle Reaktion auf die sich ändernde Abgastemperatur in der Abgasleitung, da die Abgastemperatur in direkter Nähe zum Brennraum gemessen wird. Weiterhin wird sichergestellt, dass kein zu heißes Abgas in den Turbineneinlass gelangt, da die Abgastemperatur in Strömungsrichtung vor dem Abgaskühler gemessen wird und zu heißes Abgas direkt in den Parallel-Abgaszweig und somit den Abgaskühler zur Kühlung eingeleitet wird. Den Abgasturbolader erreicht dann nur ausreichend gekühltes Abgas.

Das erfindungsgemäße Verfahren zur Regelung der Betriebstemperatur des Abgasturboladers einer Verbrennungskraftmaschine mit einer Anordnung eines Parallel-Abgaszweiges in der Abgasleitung wie zuvor beschrieben ist dadurch gekennzeichnet, dass eine Abgastemperatur unmittelbar an einem Turbineneinlass des Abgasturboladers mittels eines Temperatursensors gemessen wird und der Anteil des die Abgasleitung durchströmenden Abgases der Verbrennungskraftmaschine, der zur Kühlung durch den Abgaskühler geleitet wird, mittels der Ventileinrichtungen, in Abhängigkeit von der gemessenen Abgastemperatur im Vergleich zu einem Vorgabetemperaturwert, so geregelt wird, dass sich die gemessene Abgastemperatur am Turbineneinlass auf den zu der optimalen Betriebstemperatur des Abgasturboladers in Relation stehenden Vorgabtemperaturwert einstellt.

Bei diesem Verfahren wird die Abgastemperatur in Strömungsrichtung nach dem Abgaskühler und unmittelbar vor Eintritt in den Turbineneinlass des Abgasturboladers gemessen. Dies entspricht der Abgastemperatur mit der der Abgasturbolader tatsächlich belastet wird und die auf diese Weise in sehr enger Relation zu der Betriebstemperatur des Abgasturboladers steht. Mittels einer elektronischen Regelungsvorrichtung und zum Beispiel mit Hilfe elektromechanischer Stelleinrichtungen an den Ventileinrichtungen wird nun in Abhängigkeit von der am Turbineneinlass gemessenen Abgastemperatur und deren Abweichung von einem gewünschten Vorgabetemperaturwert ein Maß für die Betätigung der Ventileinrichtungen festgelegt. Die Ansteuerung der Ventileinrichtungen erfolgt derart, dass sich die am Turbineneinlass gemessene Abgastemperatur an den gewünschten Vorgabetemperaturwert angleicht. Ist die gemessene Abgastemperatur zum Beispiel höher als der gewünschte Vorgabetemperaturwert, so wird der Anteil des den Abgaskühler durchströmenden Abgases erhöht. Der größere Anteil an gekühltem Abgas bewirkt eine Absenkung der Temperatur des Gesamt-Abgasstroms der dem Abgasturbolader zugeführt wird und somit eine Angleichung an den Vorgabetemperaturwert.

Das Verfahren zur Regelung der Betriebstemperatur des Abgasturboladers hat, neben den vorgenannten Vorteilen der Gesamtanordnung der erfindungsgemäßen Verbrennungskraftmaschine, den Vorteil, dass alle Einflüsse auf die Abgastemperatur auf dem Weg vom Brennraum im Zylinder bis zum Turbineneinlass des Abgasturboladers automatisch berücksichtigt werden bei der Einstellung der Abgastemperatur. Dies ist möglich, da die Abgastemperatur erst am Turbineneinlass gemessen wird. Der gemessene Wert wird mit dem Vorgabetemperaturwert verglichen und abhängig vom Ergebnis des Vergleichs wird dann regelnd auf die in Strömungsrichtung davor liegende Kühleinrichtung, bestehend aus Parallel -Abgaszweig, Abgaskühler und Ventileinrichtungen, eingewirkt. Eine separate Messung und Berücksichtigung der aktuellen Kühlwirkung des Abgaskühlers wird dadurch überflüssig.

Ein entsprechendes Verfahren zur Steuerung oder Regelung der Betriebstemperatur eines Abgasturboladers ist prinzipiell unabhängig von der konkreten Ausführung und Anordnung der Ventileinrichtungen und kann selbstverständlich auch zumindest bei den in den Figuren gezeigten Ventilanordnungen eingesetzt werden.

Weitere vorteilhafte Ausgestaltungen der Erfindung werden in den Unteransprüchen offenbart. Diese Ausgestaltungen werden im Folgenden anhand der Beschreibung der Darstellungen von Ausführungsbeispielen in der Zeichnung näher erläutert.

Es zeigen:
Figur 1 eine vereinfachte schematische Darstellung einer Verbrennungskraftmaschine mit einem Turbolader, gemäß dem Stand der Technik.
Figur 2 eine vereinfachte schematische Darstellung einer Verbrennungskraftmaschine mit einem Abgaskühler in einem Parallelzweig der Abgasleitung.
Figur 3 eine Ausführung der erfindungsgemäßen Verbrennungskraftmaschine mit zwei parallelen Abgasleitungen und einem Temperatursensor vor dem Parallel-Abgaszweig.
Figur 4 eine weitere Ausführung der erfindungsgemäßen Verbrennungskraftmaschine mit zwei parallelen Abgasleitungen und einem Temperatursensor am Turbineneinlass.
Figur 5 eine weitere Ausführung der erfindungsgemäßen Verbrennungskraftmaschine mit einem Drehschieberventil zwischen Abgasleitung und Parallel-Abgaszweig.
Figur 6A und 6B eine Anordnung von schwenkbaren Ventilklappen in Abgasleitung und Parallel-Abgaszweig mit zentraler Antriebseinheit, bei geschlossenem (6A) und geöffnetem (6B) Parallel-Abgaszweig
Figur 7 eine Anordnung von drehbaren Ventilklappen in Abgasleitung und Parallel-Abgaszweig mit zentraler Antriebseinheit, in halb-geöffneter Klappenstellung.
Figur 8 eine weitere Anordnung von drehbaren Ventilklappen in Abgasleitung und Parallel-Abgaszweig mit zentraler Antriebseinheit, in halb-geöffneter Klappenstellung.
Figur 9A und 9B eine schematisch vereinfachte Darstellung eines Drehschieberventils zwischen Abgasleitung und Parallel-Abgaszweig bei geschlossenem (9A) und geöffnetem (9B) Parallel-Abgaszweig.

Funktions- und Benennungsgleiche Gegenstände sind in den Figuren mit denselben Bezugszeichen gekennzeichnet.

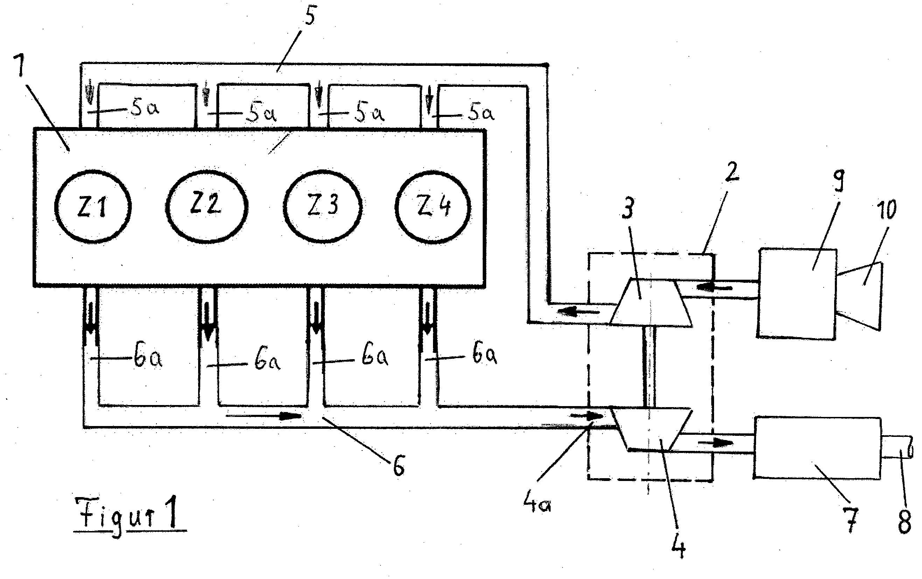

Figur 1 zeigt in schematisierter Darstellung eine Verbrennungskraftmaschine mit Abgasturbolader gemäß dem allgemein bekannten Stand der Technik. Diese weist beispielhaft einen Verbrennungsmotor 1 mit vier Zylindern, Z1 bis Z4 in Reihenanordnung auf. Selbstverständlich kann an dieser Stelle auch ein Verbrennungsmotor mit einer beliebigen anderen Anzahl (zum Beispiel 1, 2, 5, 6, 8 oder 12, etc.) und anderer Anordnung (V-Anordnung, Boxer-Anordnung oder Stern-Anordnung, etc.) von Zylindern eingesetzt werden. Der Abgasturbolader 2 weist in allgemein bekannter Weise eine Abgasturbine 4 und einen mit dieser über eine Läuferwelle starr verbundenen Frischluftverdichter 3 auf. Durch den Ansaugstutzen 10 und den Luftfilter 9 wird Frischluft vom Frischluftverdichter 3 angesaugt und auf einen gegenüber dem Umgebungs-Luftdruck erhöhten Druck verdichtet und über eine gemeinsame Frischluftleitung 5, mit jeweils einem Anschlussstutzen 5a für jeden einzelnen Zylinder, den einzelnen Zylindern Z1-Z4 zur Verbrennung zugeführt. Über eine gemeinsame Abgasleitung 6 mit jeweils einem Abgasstutzen 6a für jeden einzelnen Zylinder Z1-Z4 wird das erzeugte Abgas nach der Verbrennung abgeführt, in der gemeinsamen Abgassammelleitung 6 gesammelt und über den Turbineneinlass 4a auf die Abgasturbine 4 geführt. Das Abgas treibt das Turbinenrad der Abgasturbine 4 und somit über die Läuferwelle das Verdich- terrad des Frischluftverdichters 3 an, wird dabei entspannt und dann über den Katalysator 7 und das Auspuffrohr 8 ausgeleitet. Der Frischluftstrom und der Abgasstrom werden in den jeweiligen Leitungen und Stutzen in der Figur mit Pfeilen in Flussrichtung verdeutlicht.

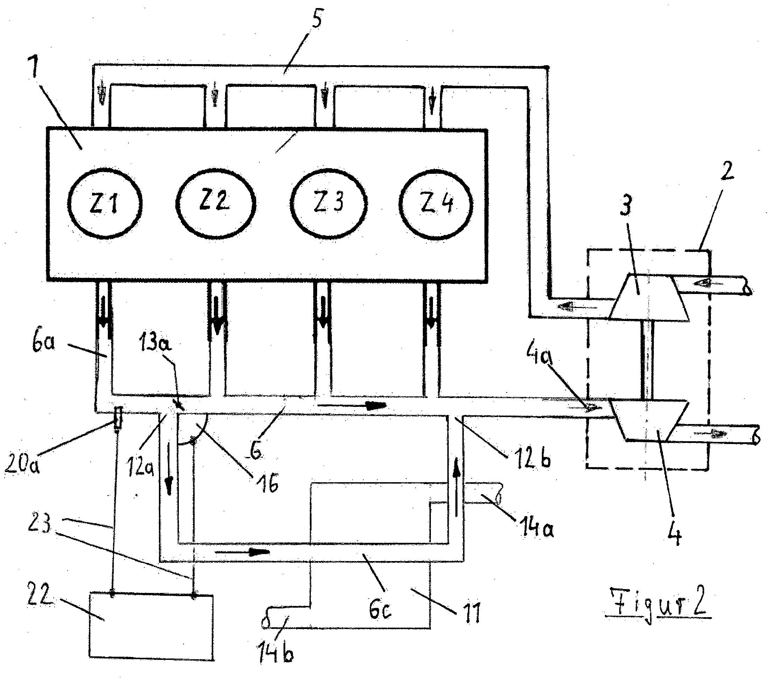

Figur 2 zeigt eine Ausführung einer Verbrennungskraftmaschine, die prinzipiell auf dem gleichen Aufbau wie in Figur 1 gezeigt basiert. Auf die Darstellung der Komponenten Ansaugstutzen, Luftfilter, Katalysator und Auspuffrohr wurde aus Gründen der Übersichtlichkeit verzichtet. Zusätzlich ist jedoch an der Abgasleitung 6 eine parallel laufende Abgasleitung, der sogenannte Parallel-Abgaszweig 6c angeschlossen. Die gezeigte Anordnung entspricht der grundlegenden Ausführung gemäß Anspruch 1. Hierbei ist der Abführanschluss 12a über den das Abgas in den Parallel-Abgaszweig 6c eingeleitet wird in der Abgassammelleitung 6 direkt hinter dem Abgasstutzen 6a des ersten Zylinders Z1 angeordnet. Der Rückführanschluss 12b, über den das durch den Parallel-Abgaszweig 6c geführte Abgas wieder der gemeinsamen Abgassammelleitung 6 zugeführt wird, ist an der Abgasleitung 6 stromabwärts der Abgasstutzen 6a der weiteren Zylinder Z2 bis Z4 und vor dem Turbineneinlass 4a angeordnet.

In dem Parallel-Abgaszweig 6c ist ein Abgaskühler 11 angeordnet. Der Abgaskühler weist einen Wärmetauscher (nicht dargestellt) auf, der von einem Kühlmittel, vorzugsweise Kühlwasser aus dem Kühlkreislauf des Verbrennungsmotors, durchströmt wird. Jedoch besteht auch die Möglichkeit einen separaten Kühlkreislauf mit einem speziellen Kühlmittel für den Abgaskühler zur Verfügung zu stellen oder als Kühlmittel unmittelbar die Umgebungsluft zu verwenden. Das Kühlmittel wird dem Wärmetauscher über eine Kühlmittelzuleitung 14a zugeführt und über eine Kühlmittelableitung 14b abgeführt. Der Wärmetauscher überträgt Wärmeenergie des heißen Abgases auf das Kühlmittel und führt diese zusammen mit dem Kühlmittel aus dem Abgaskühler ab.

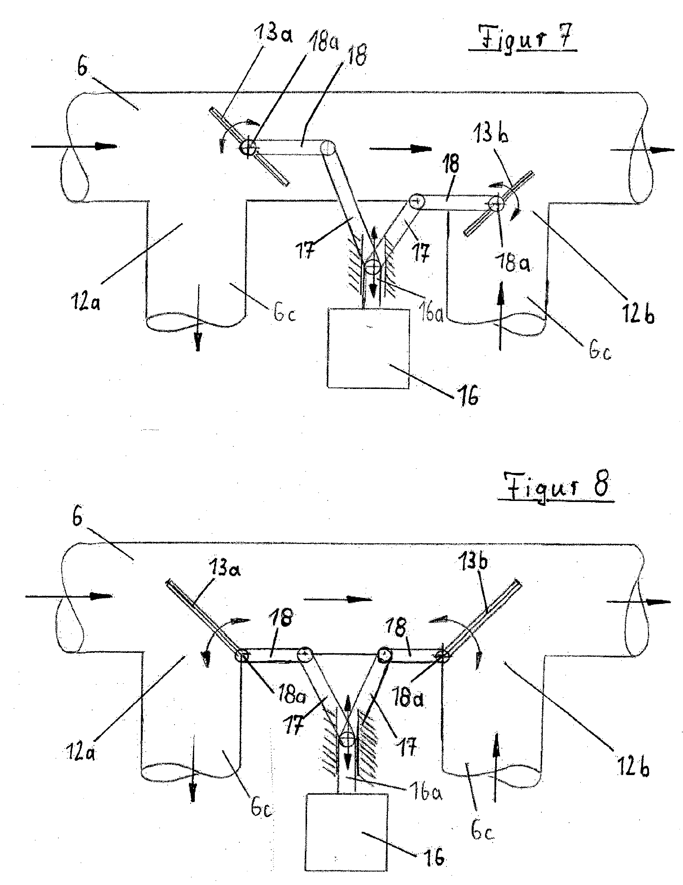

An dem Abführanschluss 12a ist eine Ventilklappe 13a angeordnet, die von einer damit gekoppelten Antriebseinheit 16 betätigt wird. Es handelt sich hierbei beispielsweise um eine Dreh-Ventilklappe 13a (siehe auch Figur 7), die so angeordnet ist, dass sie im Maß der Betätigung mittels der Antriebseinheit 16 die Abgassammelleitung 6 in Strömungsrichtung hinter dem Abführanschluss 12a kontinuierlich schließt. Durch das Schließen der Ventilklappe 13a wird der Abgasstrom aus dem Abgasstutzen 6a des ersten Zylinders Z1 in den Parallel-Abgaszweig 6c und somit in den Abgaskühler 11 umgeleitet. Bei geöffneter Ventilklappe 13a strömt der Abgasanteil des Zylinders Z1 ungehindert durch die Abgassammelleitung 6. Da bei dieser Ausführung der Abführanschluss 12a nicht geschlossen wird, kann auch bei geöffneter Ventilklappe 13a noch Abgas durch den Parallel-Abgaszweig strömen. Dieser auch als "Blowby" zu bezeichnende Anteil bleibt jedoch aufgrund des erhöhten Strömunsgwiederstandes und des längeren Strömungswegs verhältnismäßig gering. Wobei unter "Blowby" ein Abgasmassenstrom zu verstehen ist, der aufgrund des Ventilkonzepts oder aufgrund von Undichtheiten nicht entlang des gewünschten Strömungswegs fließt.

Bei dieser Anordnung des Parallel-Abgaszweigs 6c und der zugehörigen Ventilklappe 13a kann nur der Abgasanteil aus Zylinder Z1 zu einem durch das Maß der Betätigung der Ventilklappe 13a zur Kühlung in den Abgaskühler umgeleitet werden. Dies entspricht also insgesamt einem kühlbaren Abgasanteil zwischen 0% und 25%. Die Kühlwirkung auf den Gesamt-Abgas-strom ist also dementsprechend beschränkt jedoch ggf. in Bezug auf die Dimensionierung der anderen Komponenten ausreichend. Selbstverständlich ist auch eine Anordnung des Abführanschlusses 12a in der Abgasleitung in Strömungsrichtung hinter einem der weiteren Abgasstutzen 6a (jedoch vor dem Rück-führanschluss 12b) möglich. Dies erhöht den kühlbaren Abgasanteil entsprechend auf bis zu 100%.

Zur gesteuerten Einstellung des Teil-Abgasstromes durch den Parallel-Abgaszweig 6c und den Abgaskühler 11 und somit letztlich zur Einstellung der Abgastemperatur und der Betriebstemperatur des Abgasturboladers ist eine zentrale Steuer-/Regeleinheit 22 vorgesehen. Hierbei kann es sich um eine nur für diesen Prozess vorgesehene und ausgelegte Steuer-/Regeleinheit handeln oder auch um eine übergeordnete Steuer-/Regeleinheit, die ggf. noch weitere Stellgrößen des Abgasturboladers steuert oder regelt, bis hin zur zentralen Steuer-/Regeleinheit der Verbrennungskraftmaschine, die alle zum Betrieb erforderlichen Funktionen steuert, regelt oder überwacht. Diese Steuer-/Regeleinheit 22 ist über eine Signalleitung 23 mit dem Abgas-Temperatursensors 20a verbunden, der in der Abgassammelleitung 6, in Strömungsrichtung vor dem Abführanschluss 12a, angeordnet ist. Die von diesem Abgas-Tem-peratursensor 20a erzeugten Signale werden in der zentralen Steuer-/Regeleinheit ausgewertet und eine konkrete Abgastemperatur zugeordnet. Die so ermittelte Ist-Abgastemperatur wird mit einer vorgegebenen Soll-Abgastemperatur verglichen. In Abhängigkeit von der so ermittelten Temperaturdifferenz wird dann der zu kühlende Anteil des Abgasstromes und ein zugeordneter Ansteuerwert für die Antriebseinheit 16 der Dreh-Ventilklappe 13a ermittelt und über eine Steuerleitung 23 der Antriebseinheit 16 zugeführt, die wiederum die entsprechende Stellung der Dreh-Ventilklappe realisiert. Die Zuordnung eines konkreten Ansteuerwertes zu der ermittelten Temperaturdifferenz kann mit Hilfe von vorher zum Beispiel empirisch ermittelten Abhängigkeitsdiagrammen erfolgen. Diese spiegeln die Abhängigkeit der Stellung der Ventilklappe 13a von der gemessenen Abgastemperatur bei vorgegebener Betriebstemperatur des Abgasturboladers wieder. Bei dieser Steuerung müssen selbstverständlich die restlichen Einflüssse, wie zum Beispiel die Kühlwirkung des Abgaskühlers als konstant vorausgesetzt werden.

Der Vorteil der in der Figur 2 dargestellten Ausführung der Erfindung liegt in dem vergleichsweise einfach zu realisierenden Gesamtkonzept.

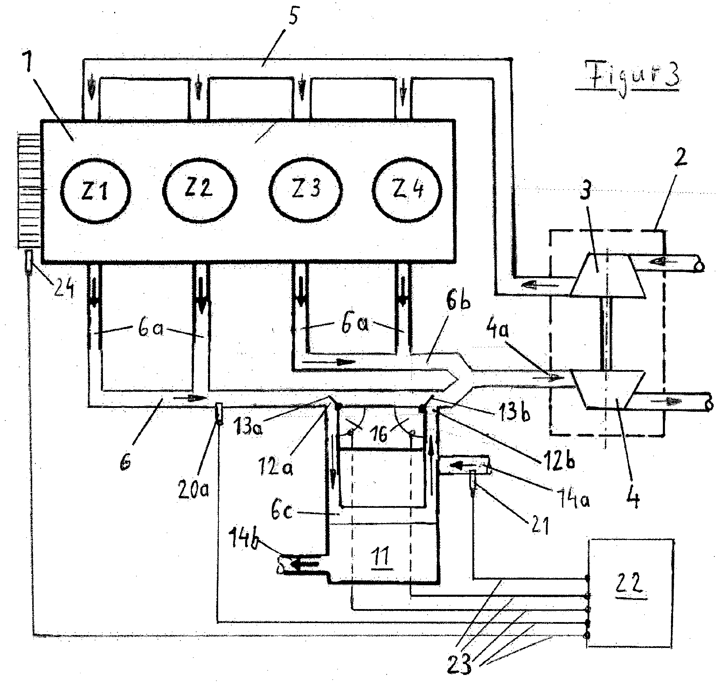

Figur 3 zeigt eine Ausführung der erfindungsgemäßen Verbrennungskraftmaschine mit einer gegenüber der in Figur 2 dargestellten Ausführung komplexeren Konfiguration. Hier sind die Abgasströme jeweils zweier Zylinder des Verbrennungsmotors in zwei parallele Abgassammelleitungen 6, 6b zusammengeführt. Dies soll verdeutlichen, dass es prinzipiell manigfaltige Möglichkeiten der Anordnung und Zusammenführung von Abgasströmen in Abgasleitungen und Abgassammelleitungen gibt, bei denen die Anordnung eines Parallel-Abgaszweiges mit einem Abgaskühler möglich ist. In diesem Beispiel ist der Parallel-Abgaszweig 6c an einer ersten Abgassammelleitung 6 in Strömungsrichtung nach den beiden, dieser Abgassammelleitung 6 zugeordnetenten Abgasstutzen 6a der Zylinder Z1 und Z2 angeordnet. Diese Ausführung verfügt weiterhin über eine Anordnung von zwei Ventileinrichtungen 13a, 13b zur Steuerung des Abgasstromes durch den Parallel-Abgaszweig 6c. Die erste, am Abführanschluss 12a angeordnete Ventileinrichtung 13a, ist als Schwenk-Ventilklappe ausgeführt und so angeordnet, dass diese im Maß ihrer Betätigung die Abgassammelleitung 6 in Strömungsrichtung hinter dem Abführanschluss 12a kontinuierlich schließt und gleichzeitig den Abführanschluss 12a kontinuierlich öffnet (siehe auch Figur 8). Die zweite, am Rückführanschluss 12b angeordnete Ventileinrichtung 13b, ist ebenfalls als Schwenk-Ventilklappe ausgeführt und so angeordnet, dass diese im Maß ihrer Betätigung den Rückführanschluss 12b kontinuierlich öffnet und gleichzeitig die Abgassammelleitung 6 in Strömungs- richtung vor dem Rückführanschluss 12b kontinuierlich schließt. Diese Anordnung der Ventileinrichtungen hat den Vorteil, dass der Abgasstrom durch den Parallel-Abgaszweig 6c zuverlässiger, genauer und mit reduziertem "Blowby" steuerbar ist.

Weiterhin ist diese Ausführung des erfindungsgemäßen Gegenstandes durch einen erhöhten Aufwand von Sensoreinheiten gekennzeichnet, die eine genauere Steuerung der Betriebstemperatur des Abgasturboladers 2 ermöglichen. Außer dem bereits in der Ausführung gemäß Figur 2 beschriebenen Abgas-Temperatursensor 20a ist hier im Bereich der Kühlmittelzuleitung 14a des Abgaskühlers 11 ein Kühlmittel-Temperatursensor 21 angeordnet. Die von diesem Kühlmittel-Temperatursensor 21 erzeugten Signale werden in der zentralen Steuer-/Regelein-heit 22 ausgewertet und eine konkrete Kühlmitteltemperatur zugeordnet. Dieser Temperaturwert wird als weitere Eingangsgröße bei der Bestimmung der Ansteuerwerte für die Antriebseinheiten 16 der Ventileinrichtungen 13a, 13b herangezogen.

Desweiteren wird das Signal eines Drehzahlsensors 24 des Verbrennungsmotors 1 über eine Signalleitung 23 der zentralen Steuer-/Regeleinheit 22 zugeführt. Der so gemessenen Motordrehzahl wird ein Abgasmassenstromwert zugeordnet, der als weitere Eingangsgröße bei der Bestimmung der Ansteuerwerte für die Antriebseinheiten 16 der Ventileinrichtungen 13a, 13b herangezogen wird. Über ein vorab zum Beispiel empirisch oder über Modellrechnungen ermitteltes und in der Steuer-/Regeleinheit abgelegtes mehrdimensionales Kennfeld, können der Gesamtheit der gemessenen Eingangsgrößen Ansteuerwerte für die Antriebseinheiten 16 der Ventileinrichtungen 13a, 13b zugeordnet werden, die bei den jeweiligen Betriebsbedingungen die Einhaltung der Betriebstemperatur des Abgasturboladers gewährleisten. Selbstverständlich können noch weitere Meßgrößen, wie zum Beispiel die Turbinendrehzahl des Abgasturboladers oder Druckwerte in der Abgasleitung, zur Steuerung der Ventileinrichtungen und somit der Betriebstemperatur des Abgasturboladers herangezogen werden.

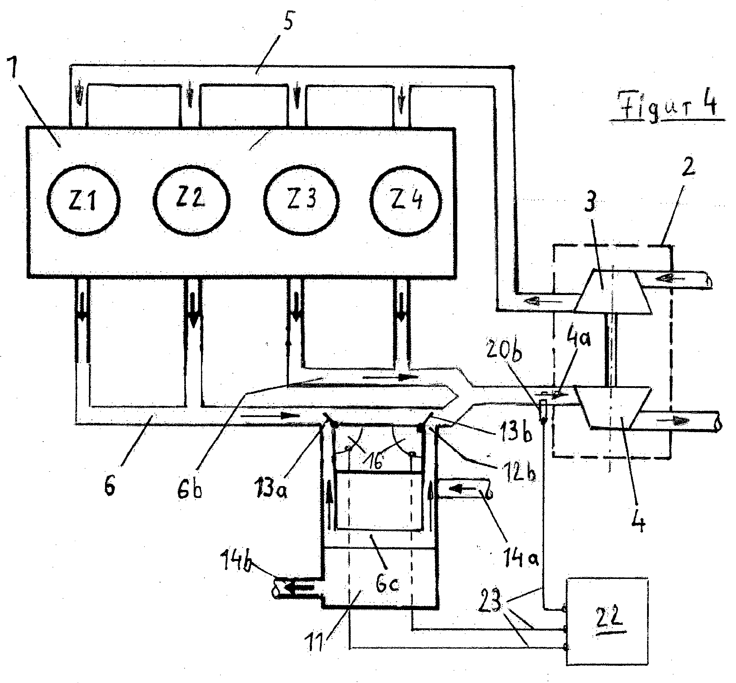

Figur 4 zeigt prinzipiell die gleiche Anordnung der Verbrennungskraftmaschine wie Figur 3. Der wesentliche Unterschied liegt jedoch in der Anordnung des Abgas-Temperatursensors 20b und dem damit verknüpften Verfahren zur Regelung der Betriebstemperatur des Abgasturboladers sowie dem dadurch möglichen Verzicht auf weitere Sensoreinheiten. Der Abgas-Temperatursensor 20b ist unmittelbar am Turbineneinlass 4a angeordnet und misst so die Temperatur des Gesamt-Abgasmas-senstroms bei Eintritt in die Abgasturbine 4, also in Strömungsrichtung nach dem Abgaskühler 11. Dies ermöglicht eine einfache und effiziente Regelung der Abgastemperatur bei Eintritt in die Abgasturbine 4 und somit die Regelung der Betriebstemperatur der Abgasturbine. Der gemessene Abgastemperaturwert am Turbineneinlass 4a wird mit dem Vorgabetemperaturwert verglichen und abhängig vom Ergebnis des Vergleichs wird dann regelnd auf die in Strömungsrichtung davor liegende Kühleinrichtung, bestehend aus Parallel-Abgaszweig, Abgaskühler und Ventileinrichtungen, eingewirkt. Das heißt, der Anteil des Abgasmassenstroms der durch den Abgaskühler 11 strömt wird durch entsprechende Verstellung der Ventileinrichtungen 13a, 13b so geregelt, dass sich die gemessene Abgastemperatur am Turbineneinlass 4a dem zur Betriebstemperatur des Abgasturboladers in Relation stehenden Temperatur-Vorgabewert angleicht.

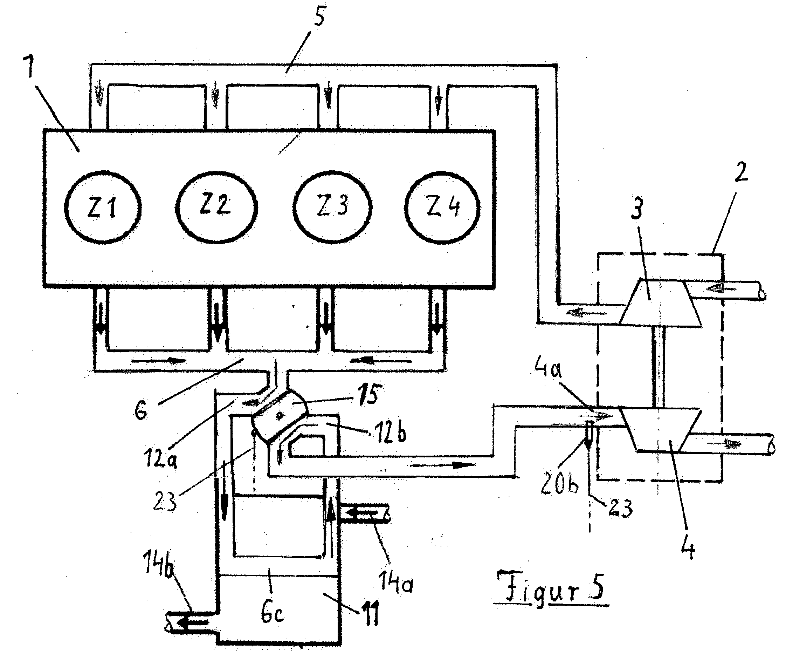

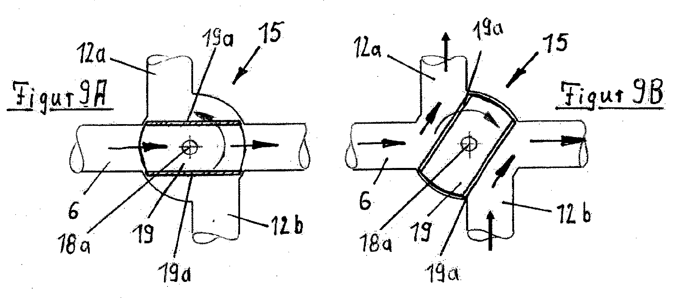

Figur 5 zeigt eine weitere Ausführungsform der erfindungsgemäßen Verbrennungskraftmaschine. Diese unterscheidet sich von den vorgenannten Ausführungen der Figuren 2, 3 und 4 durch die Zusammenführung der Teil-Abgasmassenströme aller Zylinder Z1 bis Z4 in einer Abgassammelleitung 6 in Strömungsrichtung vor dem der Ventileinrichtung 15 und durch die Ausführung der Ventileinrichtung 15 als Drehschieberventil 15 zur Steuerung des Abgasmassenstroms durch den Parallel-Abgaszweig 6c und den Abgaskühler 11. Die Anordnung des Drehschieberventils 15 ist dadurch gekennzeichnet, dass der Abführanschluss 12a und der Rückführanschluss 12b an der Abgasleitung 6 sich gegenüberliegend versetzt angeordnet sind und das Drehschieberventil in der Abgasleitung 6 zwischen Abführanschluss 12a und Rückführanschluss 12b angeordnet ist. Das Drehschieberventil 15 ist derart ausgebildete, dass dieses im Maß seiner Betätigung den Abführanschluss 12a und gleichzeitig den Rückführ-anschluss 12b kontinuierlich öffnet und dabei im gleichen Maß der Betätigung die Abgasleitung 6 zwischen dem Abführanschluss 12a und dem Rückführanschluss 12b schließt. Eine detailliertere Darstellung des Drehschieberventils erfolgt in den Figuren 9A und 9B und zugehöriger Beschreibung.

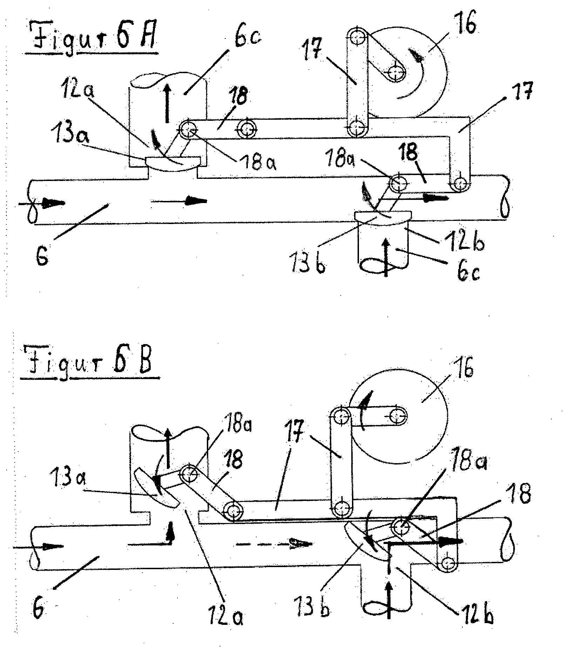

Die Figuren 6A und 6B zeigen schematisch vereinfacht eine Anordnung von als schwenkbare Ventilklappen 13a und 13b ausgebildete Ventileinrichtungen zum jeweiligen Öffnen oder Verschließen des Abführanschlusses 12a und des Rückführan-schlusses 12b. Die in der jeweiligen Figur eingetragenen Pfeile kennzeichnen zum Einen die Strömungsrichtung des Abgas-Massenstromes und zum Anderen die Bewegungsrichtung der Antriebseinheit und der Ventilklappen 13a, 13b. Die Ventilklappen 13a und 13b stehen über einen jeweiligen Drehhebel 18 und ein gemeinsames Kurbelgetriebe 17 mit der geneinsamen Antriebseinheit 16 in mechanischer Verbindung. Die Antriebseinheit ist in diesem Fall als Drehantrieb, beispielsweise als Elektromotor ausgebildet. Figur 6A zeigt die Ventilklappen 13a, 13b in geschlossenem Zustand. Bei dieser Ventilstellung ist der Parallel-Abgaszweig 6c verschlossen und das durch die Abgasleitung 6 strömende Abgas wird vollständig ohne Kühlung auf die Abgasturbine des Abgasturboladers geleitet. Die mit einem Pfeil angedeutete Drehung der Antriebseinheit gegen den Uhrzeigersinn erzeugt eine Drehung der Ventilklappen 13a, 13b um die jeweilige Drehachse 18a im Uhrzeigersinn aus ihrer geschlossenen Stellung heraus.

In Figur 6B sind die Ventilklappen 13a, 13b in geöffnetem Zustand dargestellt. Die Antriebseinheit hat sich um ca. 45° gegen den Uhrzeigersinn gedreht und so über das Kurbelgetriebe 17 und die Drehhebel 18 die Ventilklappen in die geöffnete Stellung gedreht. Da bei dieser Anordnung jedoch weder die Ventilklappe 13a noch die Ventilklappe 13b die Abgasleitung 6 zwischen Abfühanschluss 12a und Rückführanschluss 12b vollkommen verschließen, bleibt hier ein relativ großer "Blowby-Anteil" (gestrichelter Pfeil) bestehen und es wird lediglich ein Teil des heißen Abgases durch den Parallel-Abgaszweig 6c und den Abgaskühler geführt.

Figur 7 zeigt ebenfalls in schematisch vereinfachter Darstellung eine andere Anordnung von Ventilklappen 13a, 13b, die nach Art von Drosselklappen, um eine mittig durch die jeweilige Abgasleitung verlaufende Drehachse 18a drehbar sind. Dabei ist die erste Drosselklappe 13a in der Abgasleitung 6 in Strömungsrichtung des Abgas-Massenstromes (siehe Pfeile) direkt hinter dem Abführanschluss 12a angeordnet und in halb geschlossener Stellung dargestellt. Die zweite Drosselklappe 13b ist dagegen im Parallel-Abgaszweig 6c, im Bereich des Rückführanschlusses 12b angeordnet und in halb geschlossener Stellung dargestellt. Beide Drosselklappen 13a, 13b sind über Drehhebel 18 und Kurbelgetriebe 17 mit einer gemeinsamen Antriebseinheit 16 mechanisch gekoppelt. In diesem Fall kommt ein Linearantrieb zum Einsatz, der zum Beispiel als Druckluftzylinder oder Druck-Dosen-Aktuator ausgeführt sein kann. Bei weiterer Betätigung der Antriebseinheit, also bei weiterer Bewegung der Antriebsstange 16a auf die Antriebseinheit 16 zu, wird im Maß der Betätigung die erste Drosselklappe 13a und somit die Abgasleitung hinter dem Abführanschluss 12a weiter geschlossen und gleichzeitig im gleichen Maß die zweite Drosselklappe 13b und somit der Rückführanschluss 12b geöffnet. Bei umgekehrter Betätigung der Antriebsstange 16a wird die erste Drosselklappe 13a und somit die Abgasleitung hinter dem Abführanschluss 12a weiter geöffnet und gleichzeitig im gleichen Maß die zweite Drosselklappe 13b und somit der Rückführanschluss 12b geschlossen. Da die Drosselklappen 13a, 13b die jeweilige Abgasleitung verhältnismäßig dicht schließen, kann der unerwünschte "Blowby" bei dieser Ausführung auf relativ niedrigem Niveau gehalten werden. Für die prinzipielle Funktionsfähigkeit, also die Umleitung des Abgas-Massenstromes in den Parallel-Abgaszweig 6c, würde hier auch die Anordnung der ersten Drosselklappe alleine genügen. Die Anordnung der zweiten Drosselklappe 13b stellt hier lediglich sicher, dass, sofern keine Abgaskühlung erfolgen soll, bei vollständig geöffneter Abgasleitung 6 der Parallel-Abgaszweig vollständig geschlossen werden kann und kein unerwünschter "Blowby" über den Abgaskühler stattfindet.

Eine weitere Ausführung und Anordnung der Ventileinrichtungen ist in Figur 8 schematisch vereinfacht dargestellt. Dabei kommen ebenfalls zwei Ventileinrichtungen 13a, 13b zum Einsatz, die jedoch in diesem Fall als Drehklappen 13a, 13b ausgebildet sind, die jeweils um eine seitlich der jeweiligen Drehklappe angebrachte Drehachse 18a drehbar gelagert sind. Die Drehachse 18a der ersten Drehklappe 13a ist im Winkel zwischen der Abgasleitung des Parallel-Abgaszweigs 6c und der Abgasleitung 6 in Strömungsrichtung hinter dem Abführanschluss 12a so angeordnet, dass die Drehklappe 13a in einer ersten Endlage die Abgasleitung 6 in Strömungsrichtung hinter dem Abführanschluss 12a verschließt und den Abführanschluss 12a frei gibt und umgekehrt in der zweiten Endlage den Abführanschluss 12a verschließt und die Abgsleitung 6 frei gibt.

Die Drehachse 18a der zweiten Drehklappe 13b ist im Winkel zwischen der Abgasleitung des Parallel-Abgaszweigs 6c und der Abgasleitung 6 in Strömungsrichtung vor dem Rückführanschluss 12b so angeordnet, dass die Drehklappe 13b in einer ersten Endlage die Abgasleitung 6 in Strömungsrichtung vor dem Rückführanschluss 12b verschließt und den Rückführanschluss 12b frei gibt und umgekehrt in der zweiten Endlage den Abführanschluss 12a verschließt und die Abgsleitung 6 frei gibt.

Auch hier sind die Drehklappen 13a, 13b über je einen Drehhebel 18 und entsprechende Kurbelgetriebe 17 mit der Antriebsstange 16a einer Linear-Antriebseinheit 16 mechanisch gekoppelt. Wird die Antriebsstange 16a vollständig ausgefahren (in Bewegungsrichtung von der Antriebseinheit 16 weg), so werden der Abführanschluss 12a und der Rückführanschluss 12b von der jeweiligen Drehklappe 13a, 13b geschlossen und der gesamte Abgas-Massenstrom strömt direkt auf die Abgasturbine 4 (hier nicht dargestellt). Wird die Antriebsstange 16a dagegen in umgekehrter Richtung vollständig eingefahren, so wird die Abgasleitung 6 jeweils in Strömungsrichtung nach dem Abführanschluss 12a und vor dem Rückführanschluss 12b vollständig geschlossen und der gesamte Abgas-Massenstrom der Abgasleitung 6 wird durch den Parallel-Abgaszweig 6c und den Abgaskühler 11 (hier nicht dargestellt) geleitet. Auch bei dieser Ausführung und Anordnung der Ventileinrichtungen würde für die prinzipielle Funktion die Drehklappe 13a genügen, die sowohl die Abgasleitung 6 als auch den Parallel-Abgaszweig vollständig schließen kann. Aufgrund der Anordnung zweier Drehklappen, wie dargestellt, wird der "Blowby" in der jeweiligen Endstellung der Drehklappen(0% oder 100% Abgaskühlung)weiter reduziert.

In den Figuren 9A und 9B ist ein Drehschieberventil 15, wie es bei der Ausführung gemäß Figur 5 zum Einsatz kommt schematisch vereinfacht dargestellt. Dabei sind der Abführanschluss 12a und der Rückführanschluss 12b an der Abgasleitung 6 sich gegenüberliegend versetzt angeordnet, wobei in der Abgasleitung 6 zwischen Abführanschluss 12a und Rückführanschluss 12b das Drehschieberventil 15 derart angeordnet ist, dass dieses im Maß seiner Betätigung (Drehung des Drehschiebers 19 um die Drehachse 18a in Pfeilrichtung) den Abführanschluss 12a und gleichzeitig den Rückführanschluss 12b kontinuierlich öffnet und dabei im gleichen Maß der Betätigung die Abgasleitung 6 zwischen Abführanschluss 12a und Rückführanschluss 12b schließt. Der Drehschieber 19 ist in diesem Fall als beidseitig offener Hohlkörper mit zwei Seitenwänden 19a dargestellt, durch dessen Zentrum, quer zu den angeschlossenen Abgasleitungen die Drehachse 18a verläuft, um die der Drehschieber 19 drehbar ist.

In Figur 9A ist der Drehschieber 19 in seiner ersten Endlage dargestellt, wobei der Paralell-Abgaszweig 6c geschlossen ist.

Der Abführanschluss 12a und der Rückführanschluss 12b werden dabei von den Seitenwänden 19a des Drehschiebers 19 geschlossen. Der Abgas-Massestrom (durch Pfeile gekennzeichnet strömt ungehindert durch den Hohlraum zwischen den beiden Seitenwänden 19a und die Abgasleitung 6.

In Figur 9B nimmt der Drehschieber 19 die zweite Endlage ein, wobei der Parallel-Abgaszweig 6c vollständig geöffnet und die Abgasleitung 6 vollständig geschlossen ist. Der Abgas-Massenstrom fließt in dieser Stellung der Drehschieberventils 19 vollständig über den Abgaskühler 11 (hier nicht dargestellt) . Der direkte Durchgang der Abgasleitung 6 ist durch die beiden Seitenwände 19a des Drehschiebers 19 gesperrt.

Die Antriebseinheit für den Drehschieber ist in den Figuren 9A und 9B nicht dargestellt. Der Drehschieber kann jedoch beispielsweise über einen auf der Drehachse befestigten Drehhebel und einer mittels eines Kurbeltriebes damit gekoppelten Linear-Antriebseinheit, wie auch in den Figuren 7 und 8 dargestellt, angerieben werden. Eine weitere Möglichkeit des Antriebs besteht beispielsweise in der Kopplung der Drehachse 18a mit einem elektromechanischen Drehantrieb, beispielsweise einem Elektromotor, entweder unmittelbar oder über ein Zahnradgetriebe. Mit Hilfe der entsprechenden Antriebseinheit kann der Drehschieber gesteuert oder geregelt in jede beliebige Zwischenposition zwischen den beiden Endlagen eingestellt werden.

Für die Figuren 6A/B, 7, 8 und 9 gilt gleichermaßen, dass bei entsprechend gesteuerter oder geregelter Ansteuerung der jeweiligen Antriebseinheit die Ventilklappen oder der Drehschieber in eine entsprechende, beliebige Zwischenstellung gefahren werden kann und der Abgas-Massenstrom in Abgasleitung 6 entsprechend der Ventilklappen- bzw. Drehschieberstellung in zwei Teil-Abgasströme aufgeteilt wird. Es strömt also nur ein entsprechender Anteil des gesamten Abgas-Massen-stromes in den Parallel-Abgaszweig 6c und durch den Abgaskühler 11. Die Teil-Abgasströme werden dann jeweils vor dem Turbineneinlass 4a wieder zusammengeführt und gemischt. Je nach Massenanteil und Temperatur der Teil-Abgasströme stellt sich dann eine Abgastemperatur am Turbineneinlass 4a ein, die die Betriebstemperatur der Abgasturbine bestimmt. Je größer der Massenanteil des über den Abgaskühler 11 geführten Teil-Abgasstromes und je niedriger dessen Temperatur nach dem Abgaskühler 11 ist, desto niedriger wird sich die Abgastemperatur am Turbineneinlass 4a und somit auch die Betriebstemperatur der Abgasturbine einstellen.

Desweiteren können bei den gezeigten Ausführungen in den Figuren 6 bis 9 die Antriebseinheiten und Koppelgetriebe auch jeweils alternativ durch andere Antriebseinheiten und entsprechend passende Getriebe ausgetauscht werden. Die gezeigten Ausführungen sind als konkrete Beispiele zu verstehen und sollen den beanspruchten Gegenstand nicht auf diese begrenzen. Weitere alternative Ventileinrichtungen, Anordnungen und Antriebsvorrichtungen sind möglich. Insbesondere können die einzelnen Ventilklappen auch jeweils für sich mit einer separaten Antriebseinheit angetrieben und eingestellt werden, wie zum Beispiel in den Figuren 2, 3 und 4 gezeigt. Selbstverständlich sind auch Kombinationen aus den gezeigten Beispielen realisierbar.

## Patentansprüche

1. Verbrennungskraftmaschine (1) die zumindest eine Abgasleitung (6) und einen an zumindest die eine Abgasleitung (6) angeschlossenen Abgasturbolader (2) aufweist,
wobei die zumindest eine Abgasleitung (6) zwischen Verbrennungskraftmaschine (1) und Abgasturbolader (2) einen an einen Abführanschluss (12a) und einen in Strömungsrichtung nach dem Abführanschluss (12a) angeordneten Rückführanschluss (12b) der zumindest einen Abgasleitung (6) angeschlossenen Parallel- Abgaszweig (6c) mit einem darin angeordneten Abgaskühler (11) aufweist, wobei in der Abgasleitung (6) und/oder dem Parallel-Abgaszweig (6c) eine oder mehrere Ventileinrichtungen (13a, 13b, 15) so angeordnet sind, dass bei deren Betätigung ein Anteil des die Abgasleitung (6) durchströmenden Abgases der Verbrennungskraftmaschine (1) zur Kühlung durch den Abgaskühler (11) geleitet werden kann, bevor es den Abgasturbolader (2) durchströmt, **dadurch gekennzeichnet, dass**
- im Bereich des Abführanschlusses (12a) der jeweiligen Abgasleitung (6) eine erste, als Ventilklappe (13a) ausgebildete Ventileinrichtung so angeordnet ist, dass diese im Maß einer Betätigung die Abgasleitung (6) in Strömungsrichtung hinter dem Abführanschluss (12a) kontinuierlich schließt, im Bereich des Rückführanschlusses (12b) der jeweiligen Abgasleitung (6) eine zweite, als Ventilklappe (13b) ausgebildete Ventileinrichtung so angeordnet ist, dass diese im Maß einer Betätigung den Rückführanschluss kontinuierlich öffnet und dass der durch den Abgaskühler (11) geleitete Anteil des die Abgasleitung durchströmenden Abgases zwischen 0% und 100% liegt,
oder
- der Abführanschluss (12a) und der Rückführanschluss (12b) an der jeweiligen Abgasleitung (6, 6a) sich gegenüberliegend versetzt angeordnet sind, wobei in der Abgasleitung (6, 6a) zwischen Abführanschluss (12a) und Rückführanschluss (12b) eine Ventileinrichtung angeordnet ist, die derart als Drehschieberventil (15) ausgebildet ist, dass diese im Maß ihrer Betätigung den Abführanschluss (12a) und gleichzeitig den Rückführanschluss (12b) kontinuierlich öffnet und dabei im gleichen Maß der Betätigung die Abgasleitung (6) zwischen Abführanschluss (12a) und Rückführanschluss (12b) schließt.

2. Verbrennungskraftmaschine (1) nach Anspruch 1,
**dadurch gekennzeichnet, dass** zwischen Verbrennungskraftmaschine (1) und Abgasturbolader (2) mehrere Abgasleitungen (6, 6b) angeordnet sind und zumindest eine dieser Abgasleitungen (6) einen Parallel-Abgaszweig (6c) mit einem darin angeordneten Abgaskühler (11) und Ventileinrichtungen (13a, 13b, 15) gemäß Anspruch 1 aufweist.

3. Verbrennungskraftmaschine (1) nach Anspruch 1 oder 2,
**dadurch gekennzeichnet, dass** die als Ventilklappe (13a) ausgebildete erste Ventileinrichtung im Maß ihrer Betätigung gleichzeitig den Abführanschluss (12a) kontinuierlich öffnet.

4. Verbrennungskraftmaschine (1) nach einem der vorhergehenden Ansprüche, **dadurch gekennzeichnet, dass** die zweite, als Ventilklappe (13b) ausgebildete Ventileinrichtung im Maß ihrer Betätigung gleichzeitig die Abgasleitung (6) in Strömungsrichtung vor dem Rückführanschluss (12b) kontinuierlich schließt.

5. Verbrennungskraftmaschine (1) nach einem der vorhergehenden Ansprüche,, **dadurch gekennzeichnet, dass** jede Ventileinrichtung einen separaten Aktuator (16a, 16b) zur Betätigung aufweist.

6. Verbrennungskraftmaschine (1) nach einem der Ansprüche 1 bis 4, **dadurch gekennzeichnet, dass** die erste Ventileinrichtung und die zweite Ventileinrichtung nur einen gemeinsamen Aktuator (16) zur Betätigung aufweisen.

7. Verbrennungskraftmaschine (1) nach einem der vorhergehenden Ansprüche, **dadurch gekennzeichnet, dass** der Abgaskühler (11) einen mit Kühlwasser durchströmten Wärmetauscher aufweist, der dem durchströmende Abgas thermische Energie entzieht und diese mit dem Kühlwasser abführt.

8. Verfahren zur Steuerung der Betriebstemperatur des Abgasturboladers (2) einer Verbrennungskraftmaschine (1) gemäß einem der Ansprüche 1 bis 7, **dadurch gekennzeichnet, dass** eine Abgastemperatur in der Abgasleitung (6) in Strömungsrichtung vor dem Abführanschluss (12a) mittels eines Temperatursensors (20a) gemessen wird und der Anteil des die Abgasleitung (6) durchströmenden Abgases der Verbrennungskraftmaschine (1), der zur Kühlung durch den Abgaskühler (11) geleitet wird, mittels der Ventileinrichtungen (13a, 13b, 15) in Abhängigkeit von der gemessenen Abgastemperatur so eingestellt wird, dass eine Betriebstemperatur des Abgasturboladers innerhalb eines zulässigen Bereiches zu erwarten ist.

9. Verfahren zur Regelung der Betriebstemperatur des Abgasturboladers (2) einer Verbrennungskraftmaschine (1) gemäß einem der Ansprüche 1 bis 7, **dadurch gekennzeichnet, dass** eine Abgastemperatur unmittelbar an einem Turbineneinlass (4a) des Abgasturboladers (2) mittels eines Temperatursensors (20b) gemessen wird und der Anteil des die Abgasleitung (6) durchströmenden Abgases der Verbrennungskraftmaschine (1), der zur Kühlung durch den Abgaskühler (11) geleitet wird, mittels der Ventileinrichtungen (13a, 13b, 15), in Abhängigkeit von der gemessenen Abgastemperatur im Vergleich zu einem Vorgabetemperaturwert so geregelt wird, dass sich die gemessene Abgastemperatur am Turbineneinlass auf den zu der optimalen Betriebstemperatur des Abgasturboladers (2) in Relation stehenden Vorgabetemperaturwert einregelt.

## Claims

1. Internal combustion engine (1) which has at least one exhaust line (6) and an exhaust-gas turbocharger (2) connected to the at least one exhaust line (6),
wherein the at least one exhaust line (6) has, between the internal combustion engine (1) and the exhaust-gas turbocharger (2), a parallel exhaust-gas branch (6c) which is connected to a discharge port (12a) and to a return port (12b) of the at least one exhaust line (6), said return port being arranged downstream of the discharge port (12a) as viewed in a flow direction, which parallel exhaust-gas branch has an exhaust-gas cooler (11) arranged therein, wherein one or more valve device(s) (13a, 13b, 15) is/are arranged in the exhaust line (6) and/or in the parallel exhaust-gas branch (6c) such that, when said valve device(s) is/are actuated, a fraction of the exhaust gas of the internal combustion engine (1) flowing through the exhaust line (6) can be conducted through the exhaust-gas cooler (11) for cooling purposes before flowing through the exhaust-gas turbocharger (2), **characterized in that**
- a first valve device in the form of a valve flap (13a) is arranged in the region of the discharge port (12a) of the respective exhaust line (6) such that said first valve device, to the extent of an actuation, continuously closes the exhaust line (6) downstream of the discharge port (12a) as viewed in the flow direction, a second valve device in the form of a valve flap (13b) is arranged in the region of the return port (12b) of the respective exhaust line (6) such that said valve device, to the extent of an actuation, continuously opens the return port, and **in that** that fraction of the exhaust gas flowing through the exhaust line which is conducted through the exhaust-gas cooler (11) lies between 0% and 100%, or
- the discharge port (12a) and the return port (12b) are arranged offset on the respective exhaust line (6, 6a) so as to be situated opposite one another, wherein a valve device is arranged in the exhaust line (6, 6a) between discharge port (12a) and return port (12b), which valve device is in the form of a rotary slide valve (15) such that, to the extent of its actuation, it continuously opens the discharge port (12a) and simultaneously continuously opens the return port (12b), and to the same extent of the actuation, closes the exhaust line (6) between discharge port (12a) and return port (12b).

2. Internal combustion engine (1) according to Claim 1, **characterized in that** multiple exhaust lines (6, 6b) are arranged between internal combustion engine (1) and exhaust-gas turbocharger (2), and at least one of said exhaust lines (6) has a parallel exhaust-gas branch (6c) with an exhaust-gas cooler (11) and with valve devices (13a, 13b, 15) according to Claim 1 arranged therein.

3. Internal combustion engine (1) according to Claim 1 or 2, **characterized in that**, to the extent of its actuation, the first valve device, which is in the form of a valve flap (13a), simultaneously continuously opens the discharge port (12a).

4. Internal combustion engine (1) according to one of the preceding claims, **characterized in that**, to the extent of its actuation, the second valve device, which is in the form of a valve flap (13b), simultaneously continuously closes the exhaust line (6) upstream of the return port (12b) as viewed in the flow direction.

5. Internal combustion engine (1) according to one of the preceding claims, **characterized in that** each valve device has a separate actuator (16a, 16b) for actuation purposes.

6. Internal combustion engine (1) according to one of Claims 1 to 4, **characterized in that** the first valve device and the second valve device have only one common actuator (16) for actuation purposes.

7. Internal combustion engine (1) according to one of the preceding claims, **characterized in that** the exhaust-gas cooler (11) has a heat exchanger through which cooling water flows and which extracts thermal energy from the throughflowing exhaust gas and dissipates said thermal energy by way of the cooling water.

8. Method for the open-loop control of the operating temperature of the exhaust-gas turbocharger (2) of an internal combustion engine (1) according to one of Claims 1 to 7, **characterized in that** an exhaust-gas temperature in the exhaust line (6) upstream of the discharge port (12a) as viewed in the flow direction is measured by way of a temperature sensor (20a), and that fraction of the exhaust gas of the internal combustion engine (1) flowing through the exhaust line (6) which is conducted through the exhaust-gas cooler (11) for cooling purposes is adjusted, in a manner dependent on the measured exhaust-gas temperature, by way of the valve devices (13a, 13b, 15) in such a way that an operating temperature of the exhaust-gas turbocharger within an admissible range can be expected.

9. Method for the closed-loop control of the operating temperature of the exhaust-gas turbocharger (2) of an internal combustion engine (1) according to one of Claims 1 to 7, **characterized in that** an exhaust-gas temperature directly at a turbine inlet (4a) of the exhaust-gas turbocharger (2) is measured by way of a temperature sensor (20b), and that fraction of the exhaust gas of the internal combustion engine (1) flowing through the exhaust line (6) which is conducted through the exhaust-gas cooler (11) for cooling purposes is subjected to closed-loop control, in a manner dependent on the measured exhaust-gas temperature in relation to a target temperature value, by way of the valve devices (13a, 13b, 15) in such a way that the measured exhaust-gas temperature at the turbine inlet is adjusted by closed-loop control to the target temperature value, which is related to the optimum operating temperature of the exhaust-gas turbocharger (2).

## Revendications

1. Moteur à combustion interne (1) comprenant l'au moins une conduite de gaz d'échappement (6) et un turbocompresseur de gaz d'échappement (2) raccordé à l'au moins une conduite de gaz d'échappement (6) ;
l'au moins une conduite de gaz d'échappement (6) comportant entre le moteur à combustion interne (1) et le turbocompresseur de gaz d'échappement (2) une branche de gaz d'échappement parallèle (6c) avec un refroidisseur de gaz d'échappement (11) disposé à l'intérieur raccordé à un raccord d'évacuation (12a) et à un raccord de reflux (12b), disposé après le raccord d'évacuation (12a) dans la direction d'écoulement, de l'au moins une conduite de gaz d'échappement (6), un ou plusieurs dispositifs de soupape (13a, 13b, 15) étant disposés de telle sorte dans la conduite de gaz d'échappement (6) et/ou la branche de gaz d'échappement parallèle (6c) que lors de leur actionnement, une partie du gaz d'échappement du moteur à combustion interne (1) traversant la conduite de gaz d'échappement (6) peut être amenée à travers le refroidisseur de gaz d'échappement (11) pour son refroidissement, avant qu'elle ne traverse le turbocompresseur de gaz d'échappement (2), **caractérisé en ce que** :
- dans la région du raccord d'évacuation (12a) de la conduite de gaz d'échappement (6) respective, un premier dispositif de soupape réalisé sous la forme d'un clapet de soupape (13a) est disposé de telle sorte que celui-ci ferme en continu, par actionnement, la conduite de gaz d'échappement (6) dans la direction d'écoulement, derrière le raccord d'évacuation (12a), et que dans la région du raccord de reflux (12b) de la conduite de gaz d'échappement (6) respective, un deuxième dispositif de soupape réalisé sous la forme du clapet de soupape (13b) est disposé de telle sorte que celui-ci ouvre en continu par actionnement le raccord de reflux et que la quotité, conduite à travers le refroidisseur de gaz d'échappement (11), du gaz d'échappement traversant la conduite de gaz d'échappement se situe entre 0 % et 100 % ; ou
- le raccord d'évacuation (12a) et le raccord de reflux (12b) sont disposés de façon décalée opposée au niveau de la conduite de gaz d'échappement (6, 6a) respective, un dispositif de soupape étant disposé dans la conduite de gaz d'échappement (6, 6a), entre le raccord d'évacuation (12a) et le raccord de reflux (12b), ledit dispositif étant réalisé de telle sorte, sous la forme d'une soupape à clapet tournant (15), qu'il ouvre en continu, du fait de son actionnement, le raccord d'évacuation (12a) et simultanément le raccord de reflux (12b) et ferme ainsi, du fait de l'actionnement dans la même proportion, la conduite de gaz d'échappement (6) entre le raccord d'évacuation (12a) et le raccord de reflux (12b).

2. Moteur à combustion interne (1) selon la revendication 1, **caractérisé en ce que** plusieurs conduites de gaz d'échappement (6, 6b) sont disposées entre le moteur à combustion interne (1) et le turbocompresseur de gaz d'échappement (2) et qu'au moins une de ces conduites de gaz d'échappement (6) comporte une branche de gaz d'échappement parallèle (6c) avec un refroidisseur de gaz d'échappement (11) disposé à l'intérieur et des dispositifs de soupape (13a, 13b, 15) selon la revendication 1.

3. Moteur à combustion interne (1) selon la revendication 1 ou 2, **caractérisé en ce que** le premier dispositif de soupape réalisé sous la forme du clapet de soupape (13a) ouvre simultanément en continu, du fait de son actionnement, le raccord d'évacuation (12a).

4. Moteur à combustion interne (1) selon l'une quelconque des revendications précédentes, **caractérisé en ce que** le deuxième dispositif de soupape réalisé sous la forme du clapet de soupape (13b) ferme simultanément en continu, du fait de son actionnement, la conduite de gaz d'échappement (6) dans la direction d'écoulement, avant le raccord de reflux (12b).

5. Moteur à combustion interne (1) selon l'une quelconque des revendications précédentes, **caractérisé en ce que** chaque dispositif de soupape comporte un actionneur (16a, 16b) séparé pour réaliser l'actionnement.

6. Moteur à combustion interne (1) selon l'une quelconque des revendications 1 à 4, **caractérisé en ce que** le premier dispositif de soupape et le deuxième dispositif de soupape ne comportent qu'un actionneur (16) commun pour réaliser l'actionnement.

7. Moteur à combustion interne (1) selon l'une quelconque des revendications précédentes, **caractérisé en ce que** le refroidisseur de gaz d'échappement (11) comporte un échangeur thermique traversé par de l'eau de refroidissement extrayant l'énergie thermique du gaz d'échappement passant à cet endroit et l'évacuant avec l'eau de refroidissement.

8. Procédé de commande de la température de fonctionnement du turbocompresseur de gaz d'échappement (2) d'un moteur à combustion interne (1) selon l'une quelconque des revendications 1 à 7, **caractérisé en ce qu'**une température de gaz d'échappement est mesurée dans la conduite de gaz d'échappement (6) dans la direction d'écoulement, avant le raccord d'évacuation (12a), à l'aide d'un capteur de température (20a) et que la quotité de gaz d'échappement du moteur à combustion interne (1) traversant la conduite de gaz d'échappement (6) amenée, pour son refroidissement, à travers le refroidisseur de gaz d'échappement (11) est réglée de telle sorte, à l'aide des dispositifs de soupape (13a, 13b, 15), en fonction de la température de gaz d'échappement mesurée, qu'une température de fonctionnement du turbocompresseur de gaz d'échappement est attendue à l'intérieur d'une plage autorisée.

9. Procédé de réglage de la température de fonctionnement du turbocompresseur de gaz d'échappement (2) d'un moteur à combustion interne (1) selon l'une quelconque des revendications 1 à 7, **caractérisé en ce qu'**une température de gaz d'échappement est mesurée directement au niveau d'une admission de turbine (4a) du turbocompresseur de gaz d'échappement (2) à l'aide d'un capteur de température (20b) et que la quotité du gaz d'échappement du moteur à combustion interne (1) traversant la conduite de gaz d'échappement (6) amenée, pour son refroidissement, à travers le refroidisseur de gaz d'échappement (11) est réglée de telle sorte, à l'aide des dispositifs de soupape (13a, 13b, 15), en fonction de la température de gaz d'échappement mesurée par rapport à une valeur de température prescrite, que la température de gaz d'échappement mesurée se cale, au niveau de l'admission de turbine, sur la valeur de température prescrite relative à la température de fonctionnement optimale du turbocompresseur de gaz d'échappement (2).
